# FASCICULE DE BREVET EUROPEEN

(11) **EP 3 873 717 B1**
(45) Date de publication et mention de la délivrance du brevet: **15.01.2025**
(21) Numéro de dépôt: 19816828.8
(22) Date de dépôt: 29.10.2019
(51) Int. Cl.: B29C 49/42

(54) **PROCEDE ET DISPOSITIF DE GESTION DE PREFORMES IMMOBILISEES DANS UNE STATION DE CHAUFFAGE**
VERFAHREN UND VORRICHTUNG FÜR DIE VERWALTUNG VON IN EINER HEIZVORRICHTUNG IMMOBILISIERTEN VORFORMLINGEN
METHOD AND DEVICE FOR THE MANAGEMENT OF IMMOBILIZED PREFORMS IN A HEATING DEVICE

(30) Priorité: 02.11.2018 FR 1860128
(43) Date de publication de la demande: 08.09.2021
(73) Titulaire: Sidel Participations, 76930 Octeville-sur-Mer (FR)
(72) Inventeur: LAHOGUE, Yoann, 76930 Octeville-sur-mer (FR); FEUILLOLEY, Guy, 76930 Octeville-sur-mer (FR)
(74) Mandataire: Sidel Group
(86) Numéro de dépôt international: PCT/FR2019/052567
(87) Numéro de publication internationale: WO 2020/089556

(56) Documents cités:
- EP-A1- 0 571 262
- DE-A1- 102005 060 814
- DE-A1- 102012 101 915
- DE-B3- 10 259 589
- FR-A1- 3 028 204
- US-A1- 2013 277 892

## Description

### DOMAINE TECHNIQUE DE L'INVENTION

L'invention concerne un procédé de gestion de préformes captives immobilisées dans une station de chauffage pendant une interruption de production, ainsi qu'une station de chauffage pour la mise en oeuvre du procédé.

### ARRIERE PLAN TECHNIQUE DE L'INVENTION

L'invention est destinée à être mise en oeuvre dans une installation de fabrication de récipients en matériau thermoplastique et notamment en polyéthylène téréphtalate (PET) par formage, notamment par soufflage ou étirage-soufflage, de préformes. Une telle installation permet de produire des récipients en très grande série à des cadences très élevées.

Il est connu de réaliser les récipients en matériau thermoplastique, tel que le polyéthylène téréphtalate (PET), par un procédé de formage de préformes.

Selon une technique bien connue, de tels récipients sont produits en deux étapes principales.

Dans une première étape, on procède au moulage par injection d'une préforme en PET. Cette préforme comporte un corps sensiblement tubulaire qui est fermé à l'une de ses extrémités axiales, l'extrémité opposée étant ouverte par l'intermédiaire d'un col. Le col présente, dès cette opération de moulage par injection, la forme définitive du col du récipient. Généralement, le col du récipient comporte un filetage.

Dans une deuxième étape de formage, les préformes chaudes sont logées dans des cavités de moules. Puis, un fluide de formage sous pression est injecté dans les préformes pour plaquer la paroi de la préforme contre les parois de la cavité pour conformer la préforme en récipient final. Cette opération de soufflage s'accompagne généralement d'une opération d'étirage consistant à introduire une tige d'élongation dans la préforme par son col afin d'étirer axialement la paroi de la préforme.

Dans de nombreux cas, les préformes sont fabriquées par injection en un premier endroit et sont moulées par soufflage à la forme définitive du récipient en un second endroit sur une installation de fabrication spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes de taille réduite, tandis que transporter des récipients après soufflage présente l'inconvénient d'être économiquement peu rentable du fait de leur volume très important.

Pour permettre son formage, le corps de la préforme est chauffé au-delà d'une température de transition vitreuse permettant de rendre la paroi du corps malléable. Au contraire, le col est maintenu à une température inférieure à la température de transition vitreuse pour éviter sa déformation. A cet effet, l'installation de fabrication comporte, une station de chauffage qui permet de chauffer le corps des préformes à la température requise pour réaliser l'étape de formage.

Les stations de chauffage classiques sont équipées de lampes à incandescence de type halogène, qui rayonnent suivant la loi de Planck sur un spectre continu.

Avant de lancer toute production, il convient de préchauffer la station de chauffage pour l'amener, à l'aide des lampes, à une température convenable susceptible de conférer aux préformes un profil thermique permettant de mener ensuite à bien le formage.

Ce préchauffage est lent et nécessite des réglages délicats.

En outre, les lampes rayonnent généralement de la chaleur dans toutes les directions. Pour permettre d'augmenter l'efficacité de la station de chauffage, il est connu d'agencer des réflecteurs qui permettent de réfléchir le rayonnement chauffant en direction des préformes.

Le rayonnement émis par les lampes n'étant pas directif, de nombreux éléments de la station de chauffage, dont notamment les réflecteurs, accumulent de la chaleur lors du préchauffage. Il en résulte que lors d'un arrêt intempestif de la production, l'extinction des lampes ne permet pas une baisse immédiate de la température à l'intérieur de la station de chauffage. Les divers éléments chauffés restituent en effet la chaleur accumulée par un phénomène d'inertie thermique. Il s'ensuit que les préformes bloquées dans la station de chauffage continuent à chauffer de manière non maîtrisée, ce qui les rend impropres au formage. Les préformes immobilisées ainsi chauffées doivent donc être jetées au rebut. Une installation est notamment décrite dans le document DE1 0259589. Ce document décrit une installation de fabrication de corps creux comprenant une station de chauffage des préformes, un poste de soufflage, et au moins un poste de contrôle des préformes situé en amont et/ou en aval de la station de chauffage. Ce contrôle de préformes permet d'éjecter les préformes détectées comme défectueuses en amont et en aval de la station de chauffage selon de défaut détecté.

Le document US2013277892 décrit un procédé de gestion de préformes captives immobilisées dans une station de chauffage pendant une interruption de production, la station de chauffage faisant partie d'une installation de fabrication de récipients en matériau thermoplastique par formage des préformes chauffées par la station de chauffage, les préformes suivant un flux de production à travers l'installation de fabrication. Le procédé consistant à bloquer du flux de production les préformes captives dites "froides", qui ont été immobilisées avant d'entrer dans le four, et à éjecter du flux de production les préformes captives dites "chaudes", qui ont été au moins partiellement chauffées, vers un flux de rebut. 11

### BREF RESUME DE L'INVENTION

L'invention propose un procédé de gestion de préformes captives immobilisées dans une station de chauffage pendant une interruption de production, la station de chauffage faisant partie d'une installation de fabrication de récipients en matériau thermoplastique par formage des préformes chauffées par la station de chauffage, les préformes suivant un flux de production à travers l'installation de fabrication, la station de chauffage comportant :
- un dispositif de convoyage de préformes comportant des supports individuels circulant en circuit fermé, chaque support individuel étant destiné à transporter une préforme en déplacement continu le long d'un trajet de transport prédéterminé formant un tronçon du flux de production, depuis un point d'entrée jusqu'à un point de sortie,
- une cavité de chauffe bordée d'au moins une rangée d'émetteurs de rayonnement électromagnétique monochromatique commandés entre un état éteint et un état allumé, la cavité de chauffe étant traversée par le trajet de transport ;
le procédé consistant à à éjecter du flux de production les préformes captives dites "froides", qui ont été immobilisées avant d'avoir été exposées au rayonnement électromagnétique émis par les émetteurs, vers un flux de recyclage, et à éjecter du flux de production les préformes captives dites "chaudes", qui ont été au moins partiellement exposées au rayonnement électromagnétique émis par les émetteurs, vers un flux de rebut séparé du flux de recyclage.

Selon d'autres caractéristiques du procédé réalisé selon les enseignements de l'invention :
- les préformes captives froides et les préformes captives chaudes sont éjectées sélectivement du flux de production par deux dispositifs distincts d'éjection de préformes ;
- les préformes captives froides et les préformes captives chaudes sont éjectées du flux de production par un dispositif d'éjection commun ;
- les préformes captives froides, respectivement les préformes captives chaudes, éjectées par le dispositif d'éjection commun sont sélectivement aiguillées vers le flux de recyclage, respectivement vers le flux de rebut, par un dispositif de triage ;
- les préformes captives froides sont éjectées du flux de production en amont de la cavité de chauffe ;
- les préformes captives froides sont éjectées du flux de production en aval de la cavité de chauffe ;
- les préformes captives froides sont éjectées du flux de production en aval du point de sortie de la station de chauffage, par exemple lorsque les préformes sont prises en charge par une roue de transfert agencée directement en aval de la station de chauffage ;
- les émetteurs de la cavité de chauffe sont maintenus dans un état éteint tant que des préformes captives froides circulent dans la cavité de chauffe ;
- au moins une partie des préformes captives froides orientées vers le flux de recyclage sont ultérieurement transformées en récipient final par formage après chauffage ;
- les préformes captives froides orientées vers le flux de recyclage sont à nouveau introduites dans le flux de production en amont de la station de chauffage ;
- au moins une partie des préformes captives froides orientées vers le flux de recyclage sont détruites et leur matériau est réutilisé pour fabriquer de nouvelles préformes - l'installation de fabrication comporte une station de formage qui est agencée en aval de la station de chauffage le long du flux de production, les préformes captives chaudes étant éjectées du flux de production en aval de la station de chauffage, par exemple au niveau de la station de formage.

L'invention propose aussi une station de chauffage pour la mise en oeuvre du procédé, comportant un premier dispositif d'éjection agencé le long du trajet de transport en aval de la cavité de chauffe permettant d'éjecter sélectivement une préforme de son support individuel en amont du point de sortie, la préforme ainsi éjectée étant dirigée vers le flux de rebut, et ce qu'elle comporte un deuxième dispositif d'éjection agencés le long du trajet de transport permettant d'éjecter sélectivement une préforme de son support individuel en amont du point de sortie, la préforme ainsi éjectée étant dirigée vers un flux de recyclage en direction du point d'entrée de la station de chauffage.

L'invention propose aussi une installation de fabrication de récipients pour la mise en oeuvre du procédé, comportant un dispositif commun d'éjection des préformes captives, l'installation de fabrication comportant un dispositif de triage sélectif des préformes éjectées par ledit dispositif commun d'éjection vers un flux de recyclage ou vers un flux de rebut.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente schématiquement une installation de fabrication de récipients à partir de préformes réalisée selon les enseignements de l'invention ;
- la figure 2 est une vue de côté qui représente schématiquement une portion d'un dispositif de convoyage de préformes appartenant à une station de chauffage de l'installation de la figure 1 ;
- la figure 3 est une vue similaire à celle de la figure 2 qui représente le dispositif de convoyage passant au niveau d'un dispositif d'éjection de préformes de la station de chauffage en direction d'un flux de rebut ;
- la figure 4 est une vue similaire à celle de la figure 3 qui représente le dispositif de convoyage passant au niveau d'un dispositif d'éjection de préformes de la station de chauffage en direction d'un flux de recyclage ;
- la figure 5 est une vue de côté qui représente schématiquement des moyens de triage de préformes éjectées par un moyen commun d'éjection sélectivement en direction d'un flux de rebut ou en direction d'un flux de recyclage.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations longitudinale, dirigée selon le sens de déplacement des préformes le long de leur trajet de transport, verticale, dirigée selon le sens de la gravité, et transversale indiquées par le trièdre L,V,T des figures.

Dans la suite de la description, les termes "amont" et "aval" seront employés en référence au sens de déplacement des préformes le long de leur flux "P" de production et notamment le long de leur trajet de transport.

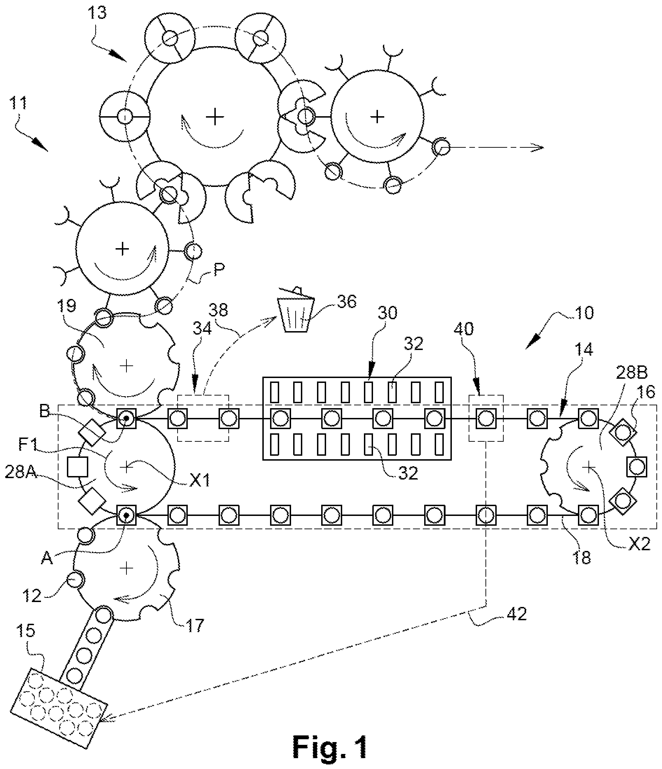

On a représenté à la figure 1 une station 10 de chauffage de préformes 12 en matériau thermoplastique. La station 10 de chauffage appartient à une installation 11 de fabrication de récipient en matériau thermoplastique par formage, notamment étirage-soufflage, desdites préformes 12.

Les préformes 12 se déplacent en file à travers l'installation 11 de fabrication en suivant un flux "P" de production depuis un point "A" d'entrée de la station 10 de chauffage jusqu'à une sortie de l'installation 11 de fabrication sous forme de récipients finis conformes à un cahier des charges, après formage dans une station 13 de formage. Le long du flux "P" de production, les préformes 12 et les récipients finaux se déplacent en file et ils sont maintenus individuellement par des supports individuels tels que des pinces, des encoches, des moules, etc.

La station 10 de chauffage comporte un dispositif 14 de convoyage des préformes 12 en file. Le dispositif 14 de convoyage comporte des supports 16 individuels circulant en circuit fermé dans la station 10 de chauffage. Chaque support 16 individuel est destiné à transporter une préforme 12 en déplacement continu le long d'un trajet 18 de transport prédéterminé depuis un point "A" d'entrée de la station 10 de chauffage qui est alimenté par une file de préformes 12 jusqu'à un point "B" de sortie en direction de la station 13 de formage, notamment de moulage par soufflage ou par étirage-soufflage. Le trajet 18 de transport forme un tronçon du flux "P" de production des préformes 12.

L'installation 11 de fabrication comporte un dispositif 15 de mise en ligne et de redressement des préformes 12 dans lequel les préformes 12 sont déversées en vrac et dans lequel les préformes 12 sont alignées et redressées. Ce dispositif 15 de mise en ligne et de redressement alimente la station 10 de chauffage en préformes 12. Il existe de nombreux dispositifs d'alignement et de redressement, tels que des dispositifs à centrifugeuse et des dispositifs à rail gravitaire. Ces dispositifs sont bien connus et ne seront pas détaillés par la suite.

Le dispositif 14 de convoyage est ici alimenté en préformes 12 froides par une roue 17 de transfert interposée entre le dispositif 15 de mise en ligne et de redressement et la station 10 de chauffage. La roue 17 de transfert est agencée tangentiellement au point "A" d'entrée, tandis que les préformes 12 chaudes sont prises en charge individuellement par une roue 19 de transfert agencée tangentiellement au point "B" de sortie. Depuis le point "B" de sortie jusqu'au point "A" d'entrée, les supports 16 individuels du dispositif 14 de convoyage circulent à vide.

Généralement, chaque support 16 individuel comporte des moyens susceptibles d'entraîner la préforme 12 en rotation autour de son axe principal durant son déplacement le long d'au moins une partie du trajet 18 de transport pour permettre un chauffage homogène du corps de la préforme 12. Un tel support 16 individuel est parfois appelé "tournette".

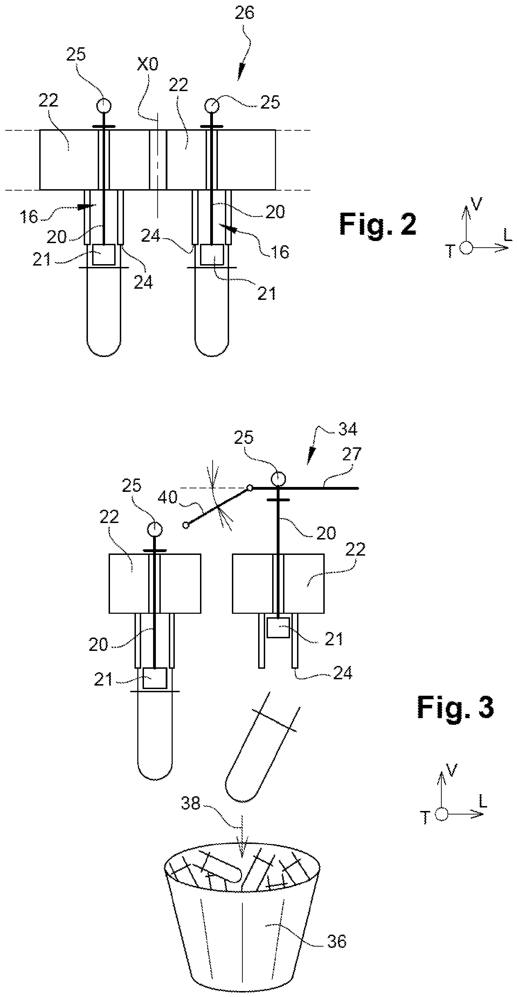

Dans le mode de réalisation représenté aux figures 2 à 4, le dispositif 14 de convoyage comporte ici une pluralité d'éléments 22 de transport formant les maillons d'une chaîne 26 de transport fermée dont une portion est visible à la figure 2. La chaîne 26 de transport est souple. A cet effet, les éléments 22 de transport sont montés articulés les uns aux autres autour d'axes verticaux "X0". La chaîne 26 de transport est montée déplaçable par rapport à un bâti fixe par rapport au sol de la station 10 de chauffage.

En se reportant à nouveau à la figure 2, chaque élément 22 de transport porte au moins un support 16 individuel. Chaque support 16 individuel comporte un mandrin 21.

De manière connue, le mandrin 21 est pourvu de moyens élastiques (non représentés), tel qu'un joint torique, avantageusement réalisé dans un matériau élastique (tel qu'un élastomère), et dont le diamètre externe est égal ou légèrement supérieur au diamètre interne du col d'une préforme 12, de façon à assurer la sustentation de la préforme 12 par frottement contre la paroi interne du col, lorsque le mandrin 21 est inséré dans le col de la préforme 12.

Dans l'exemple représenté aux figures, chaque support 16 individuel est susceptible d'être commandé entre une position active dans laquelle la préforme 12 se déplace de manière solidaire avec le support 16 individuel, et une position inactive dans laquelle la préforme 12 est totalement libre par rapport au support 16 individuel.

Le mandrin 21 est ici monté coulissant en translation verticale suivant un axe vertical, par rapport à l'élément 22 de transport. Le mandrin 21 est fixé à l'extrémité inférieure d'une tige 20 cylindrique.

Le mandrin 21 est monté en coulissement vertical par rapport à l'élément 22 de transport, entre une position inactive dans laquelle le mandrin 21 est rétractée par rapport à une face 24 de butée (à droite à la figure 3), et une position active (figure 2 et à gauche à la figure 3) dans laquelle le mandrin 21 fait saillie vers le bas par rapport à la face 24 de butée pour s'emmancher dans le col d'une préforme 12. A titre d'exemple non limitatif, la face 24 de butée est ici montée fixe par rapport à l'élément 22 de transport.

Selon un exemple non limitatif, le mandrin 21 est ici rappelé élastiquement vers sa position active, tandis qu'il est commandé vers sa position inactive par coopération entre un galet 25 suiveur de came, agencé ici à une extrémité supérieure de la tige 20, avec une came 27, illustrée à la figure 3, qui agit à l'encontre de l'effort de rappel élastique.

Plus particulièrement, en position active, le mandrin 21 est destiné à être emmanché dans le col d'une préforme 12, tandis qu'en position inactive, le mandrin 21 est destiné à être extrait du col de ladite préforme 12, la préforme 12 prenant appui contre la face 24 de butée pour permettre son extraction.

En variante non représentée de l'invention, le mandrin est destiné à saisir le col du corps creux par l'extérieur. Cette variante est bien connue de l'homme du métier et ne sera donc pas décrite plus en détails par la suite.

Selon une variante non représentée de l'invention, les préformes sont chargées ou déchargées de leur support par des pinces de prise en charge qui se déplacent conjointement avec les supports sur au moins une partie de leur trajet, les pinces étant mobiles axialement par rapport au support pour permettre l'emboîtement ou le déboîtement des préformes de leur mandrin. Dans ce cas, les mandrins ne sont pas coulissants par rapport à l'élément de transport. Les pinces sont par exemple portées par une roue de guidage de la chaîne de transport.

En se reportant à nouveau à la figure 1, le dispositif 14 de convoyage comprend, par ailleurs, une première roue 28A de guidage de la chaîne 26 de transport et une deuxième roue 28B de guidage de la chaîne 26 de transport montées chacune rotative sur le bâti de la station 10 de chauffage autour d'un axe vertical "X1, X2" respectif. La chaîne 26 de transport est engrenée autour des deux roues 28A, 28B de guidage. L'une des deux roues de guidage, dite menante, est entraînée en rotation par un moteur pour mettre en mouvement la chaîne de transport afin de déplacer les éléments 22 de transport le long du circuit fermé. Les roues 28A, 28B de guidage tournent ici dans un sens antihoraire, comme cela est indiqué par la flèche "F1" de la figure 1.

En variante non représentée de l'invention, la chaîne de transport permet de compacter les préformes en se pliant en accordéon lorsqu'elle passe dans la cavité de chauffe comme cela est décrit en détails dans le document EP-B1-2.623.439.

Selon une variante non représentée de l'invention, le dispositif de convoyage est formé d'éléments de transport qui ne sont pas reliés entre eux et qui forment des navettes circulant sur des rails disposés en circuit fermé. Les chariots et les rails forment par exemple un moteur linéaire, le rail formant un "stator" mis à plat et le chariot formant un rotor dudit moteur linéaire. Un tel dispositif de convoyage pour une station de chauffage est par exemple décrit dans le document FR-A1-3.035.651.

En outre, chaque support 16 individuel est susceptible d'entraîner en rotation la préforme 12 autour de son axe pendant son déplacement le long du trajet 18 de transport pour permettre le chauffage homogène de ladite préforme 12.

Selon un premier exemple non représenté, le support 16 individuel est entraîné en rotation par un pignon solidaire du mandrin 21 qui coopère avec une crémaillère fixe de la station 10 de chauffage.

Selon un autre exemple non représenté, le support 16 individuel est entraîné en rotation au moyen d'un moteur électrique embarqué sur l'élément 22 de transport.

En se reportant à nouveau à la figure 1, la station 10 de chauffage comporte aussi une cavité 30 de chauffe traversée par le trajet 18 de transport pour permettre le chauffage des préformes 12 durant leur déplacement. La cavité 30 de chauffe est agencée sur une portion du trajet 18 de transport, à proximité du point "B" de sortie des préformes.

La cavité 30 de chauffe est destinée à chauffer les corps des préformes 12 au-delà de leur température de transition vitreuse pour permettre leur formage par la station 13 de formage pendant qu'elles sont chaudes.

La cavité 30 de chauffe est bordée d'une série d'émetteurs 32 adjacents, par exemple deux rangées d'émetteurs 32 en regard l'une de l'autre.

Chaque émetteur 32 est équipé de sources de rayonnement électromagnétique monochromatique (notamment des lasers), dont le spectre d'émission s'étend pour l'essentiel dans le domaine de l'infrarouge.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle ayant un spectre d'émission en fréquence qui s'étend sur une bande de largeur spectrale faible mais non nulle, centrée sur une fréquence principale où l'intensité du rayonnement est maximale. Pour les besoins de la présente demande, on considère comme monochromatique une telle source réelle. De même, pour les besoins de la présente description, on considère comme monochromatique une source multimode, c'est-à-dire émettant sur un spectre discret comprenant plusieurs bandes étroites centrées sur des fréquences principales distinctes.

L'avantage d'un rayonnement monochromatique est que, bien choisi, il peut être concentré sur une (ou plusieurs) fréquence(s) pour laquelle (ou pour lesquelles) le comportement thermique du matériau des préformes 12 est, en termes d'absorption, particulièrement intéressant.

A titre d'exemple, pour obtenir une chauffe rapide en surface des préformes 12, on peut choisir une (ou plusieurs) fréquence(s) dans l'infrarouge pour laquelle (pour lesquelles) le matériau est très absorbant. A contrario, pour obtenir une chauffe plus lente mais plus homogène dans l'épaisseur des préformes 12, on peut choisir une (ou plusieurs) fréquence(s) pour laquelle (pour lesquelles) le matériau est relativement moins absorbant.

En pratique, les sources dont sont pourvus les émetteurs 32 sont des lasers (par exemple des diodes laser) émettant dans l'infrarouge et organisés par juxtaposition et superposition pour former une ou plusieurs matrices.

En l'espèce, chaque matrice peut être une matrice de diodes laser à cavité verticale émettant par la surface (VCSEL), chaque diode émettant par exemple un faisceau laser d'une puissance unitaire de l'ordre du milliwatt à une longueur d'onde d'environ 1 µm.

Ces sources sont radiantes, c'est-à-dire que le rayonnement émis est transmis aux préformes 12 sans que l'air serve de vecteur de transmission.

Les sources convertissent la puissance électrique qui leur est fournie en un champ électromagnétique rayonné dans la cavité.

Les émetteurs 32 sont commandés entre un état éteint, dans lequel ils n'émettent aucun rayonnement, et un état allumé dans lequel ils sont alimentés par une puissance électrique pour émettre un rayonnement. Cette puissance électrique peut être variable. Selon un mode de réalisation non représenté, la station de chauffage comprend avantageusement, pour l'alimentation électrique des émetteurs 32, un variateur de puissance. Ce variateur peut être analogique ou électronique.

En fonctionnement normal de la station 10 de chauffage, les émetteurs 32 sont commandés de manière à chauffer le corps des préformes 12 selon un profil thermique déterminé qui est adapté à la forme du récipient final à former.

Une station 10 de chauffage fonctionnant à l'aide de cette technologie présente de nombreux avantages par rapport à un four classique à lampes halogènes. Entre autres, dans ce type de station 10 de chauffage :
- les émetteurs 32 rayonnent dans l'infrarouge sans diffusion de chaleur, ce qui, à la différence d'un four halogène, rend inutile toute ventilation ;
- les préformes 12 peuvent être chauffées selon des profils thermiques plus précis ;
- aucune préchauffe n'est nécessaire.

Les inventeurs ont remarqué que, outre ces avantages connus, l'inertie thermique de la station 10 de chauffage est devenue négligeable, notamment du fait de l'absence de diffusion de chaleur. En d'autres termes, les préformes 12 s'échauffent au-delà de leur température de transition vitreuse uniquement lorsqu'elles sont exposées directement au rayonnement émis par les émetteurs 32 dans la cavité 30 de chauffe.

En cas d'interruption fortuite de la circulation des préformes 12 dans la station 10 de chauffage, les préformes 12 embarquées par le dispositif 14 de convoyage se retrouvent captives à l'intérieur de la station 10 de chauffage. Elles sont ainsi immobilisées sur le trajet 18 de transport. De telles préformes 12 seront par la suite appelées "préformes 12 captives".

Les préformes 12 captives qui sont immobilisées en amont de la cavité 30 de chauffe n'ont pas encore été exposées au rayonnement des émetteurs 32. Elles sont donc baignées dans une atmosphère froide par rapport à leur température de transition vitreuse. Ces préformes 12 seront par la suite appelées "préformes 12 captives froides".

Les préformes 12 captives qui sont immobilisées dans la cavité 30 de chauffe ou en aval de la cavité de chauffe ont été au moins partiellement exposées au rayonnement des émetteurs 32. Ces préformes 12 seront par la suite appelées "préformes 12 captives chaudes" car leur corps a été chauffé à une température approchant ou dépassant leur température de transition vitreuse.

Pour éviter que les préformes 12 captives immobilisées dans la cavité 30 de chauffe ne fondent, les émetteurs 32 sont éteints dès qu'une interruption de circulation des préformes 12 est détectée.

Lorsque les préformes 12 captives chaudes sont immobilisées trop longtemps, la température de leur corps diminue lentement, ce qui provoque une cristallisation du matériau thermoplastique. Une telle préforme 12 ne peut plus redevenir malléable par chauffage, et elle ne peut donc plus être utilisée pour former un récipient final. Ces préformes 12 sont traditionnellement envoyées au rebut.

A l'issue de l'interruption de production, la station 10 de chauffage contient donc deux types de préformes 12 captives, à savoir des préformes 12 captives froides et des préformes 12 captives chaudes.

L'invention propose un procédé de gestion des préformes 12 captives qui consiste à trier les préformes captives froides des préformes captives chaudes. Les préformes captives froides sont plus particulièrement éjectées du flux "P" de production, sans avoir été exposées au rayonnement des émetteurs 32, vers un flux de recyclage. Les préformes 12 captives chaudes sont éjectées du flux de production vers un flux de rebut séparé du flux de recyclage.

L'invention propose ainsi un procédé de gestion qui permet de tirer avantage du fait que le matériau constituant les préformes 12 captives froides présente encore les propriétés structurelles lui permettant de subir une opération de formage après chauffage pour la réalisation de récipients finaux. L'invention propose plus particulièrement de jeter au rebut les préformes 12 captives chaudes et d'exploiter les préformes 12 captives.

Ainsi, contrairement à ce qui est actuellement pratiqué, toutes les préformes 12 captives ne sont pas jetées au rebut. Ceci permet de réaliser une économie non négligeable pour le fabricant de récipient.

Par exemple, au moins une partie des préformes 12 captives froides, qui sont orientées vers le flux 42 de recyclage, sont ultérieurement transformées en récipient final par formage après chauffage soit par ladite installation 11 de fabrication, soit par une autre installation de fabrication similaire située ailleurs.

Dans le cas d'un chauffage par la station 10 de chauffage, les préformes 12 captives froides orientées vers le flux 42 de recyclage sont à nouveau introduites dans le flux "P" de production au début de la station 10 de chauffage. Les préformes 12 captives froides recyclées sont par exemple mélangées en vrac avec des préformes 12 neuves dans le dispositif 15 de mise en ligne et de redressement, comme cela est indiqué par la flèche 42 de la figure 1.

Selon une variante de l'invention, au moins une partie des préformes 12 captives froides, qui sont orientées vers le flux 42 de recyclage, sont détruites et leur matériau est réutilisé pour fabriquer de nouvelles préformes 12, par exemple par moulage par injection ou par extrusion.

Selon un premier mode de réalisation de l'invention, les préformes captives froides et les préformes captives chaudes sont éjectées sélectivement du flux de production par deux dispositifs distincts d'éjection de préformes du flux "P" de production. Ainsi, l'installation 11 de fabrication comporte un premier dispositif 34 d'éjection qui éjecte les préformes 12 captives chaudes vers un flux 38 de rebut, et un deuxième dispositif 41 d'éjection qui éjecte les préformes captives froides vers un flux 42 de recyclage.

Dans ce cas, le tri des deux types de préformes 12 captives, c'est-à-dire les préformes 12 captives chaudes et les préformes 12 captives froides, est réalisé pendant que les préformes 12 captives suivent encore le flux "P" de production. L'un des deux dispositifs 34, 41 d'éjection, qui est agencé en amont le long du flux "P" de production par rapport à l'autre des deux dispositifs 34, 41 d'éjection, est commandé pour éjecter sélectivement le type de préformes 12 captives auquel il est associé, laissant ainsi les préformes 12 captives de l'autre type poursuivre leur déplacement dans le flux "P" de production jusqu'à l'autre des deux dispositifs 34, 41 d'éjection.

Le nombre de préformes 12 à éjecté par le dispositif 34, 41 d'éjection situé le plus en amont est par exemple déterminé en fonction de la vitesse de défilement des préformes. La vitesse de défilement des préformes permet en effet d'estimer le temps nécessaire pour faire passer toutes les préformes 12 captives chaudes au niveau du dispositif 34, 41 d'éjection le plus amont en prenant en compte la distance entre le début de la cavité 30 de chauffe et ledit dispositif 34, 41 d'éjection le plus amont.

En variante non représentée de l'invention, un détecteur est agencé dans l'installation pour détecter le passage des préformes 12 captives chaudes au niveau de chaque dispositif 34, 41 d'éjection. Il s'agit par exemple d'un détecteur de température.

Selon un exemple de réalisation de l'invention, la station 10 de chauffage est ici équipée du premier dispositif 34 d'éjection des préformes 12 captives chaudes qui comporte des moyens d'éjection qui sont agencés le long du trajet 18 de transport en aval de la cavité 30 de chauffe et en amont du point "B" de sortie. Les moyens d'éjection permettent de libérer sélectivement une préforme 12 de son support 16 individuel en amont du point "B" de sortie. La préforme 12 ainsi éjectée est dirigée vers un flux 38 de rebut, par exemple vers une benne 36.

Selon l'exemple non limitatif illustré à la figure 3, les moyens d'éjection comportent ici un aiguillage 40 qui est commandé entre une position escamotée, indiquée en traits interrompus, dans laquelle le galet 25 du support 16 individuel passe au-dessous de la came 27, le mandrin 21 demeurant ainsi en position active, et une position de bifurcation, indiquée en trait plein, dans laquelle l'aiguillage 40 est interposé sur le trajet du galet 25 pour guider ce dernier en direction de la came 27 pour commander le mandrin 21 en position inactive et ainsi éjecter la préforme 12.

Lorsqu'une préforme 12 est éjectée par les moyens d'éjection du premier dispositif 34 d'éjection, elle tombe vers la benne 36 de rebut, éventuellement par l'intermédiaire de toboggan ou de tapis de convoyage.

En variante non représentée de l'invention, les préformes captives chaudes sont éjectées du flux "P" de production des préformes en aval de la station de chauffage, par exemple au niveau de la station 13 de formage, en même temps que des récipients non conformes après formage.

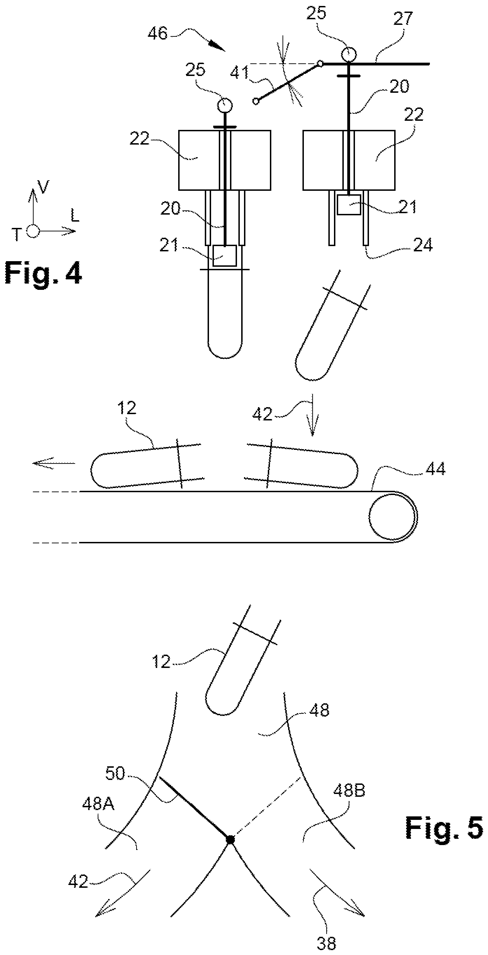

Dans l'exemple représenté aux figures 1 et 4, l'éjection des préformes 12 captives froides du flux "P" de production est réalisé dans la station 10 de chauffage. A cet effet, la station 10 de chauffage comporte, outre le premier dispositif 34 d'éjection associé aux préformes 12 captives chaudes, un deuxième dispositif 41 d'éjection qui est destiné à éjecter sélectivement des préformes 12 de leur support 16 individuel. Les préformes 12 éjectées par le deuxième dispositif 41 d'éjection sont ainsi extraites du trajet 18 de transport, et elles suivent un flux 42 de recyclage.

Comme cela est représenté plus en détails à la figure 4, le deuxième dispositif 41 d'éjection comporte des moyens d'éjection qui sont distincts des moyens d'éjection du premier dispositif 34 d'éjection mais qui remplissent la même fonction. Ainsi, les moyens d'éjection du deuxième dispositif 41 d'éjection permettent de libérer sélectivement une préforme 12 de son support 16 individuel. Les moyens d'éjection sont ici agencés en amont du point "B" de sortie de la station 10 de chauffage.

De manière non limitative, les moyens d'éjection du deuxième dispositif 41 d'éjection présentent ici la même structure que les moyens d'éjection du premier dispositif 34 d'éjection. Ainsi, selon l'exemple illustré à la figure 4, les moyens d'éjection comportent ici un aiguillage 46 qui est commandé entre une position escamotée, indiquée en traits interrompus, dans laquelle le galet 25 du support 26 individuel passe au-dessous de la came 27, la préforme 12 n'étant ainsi pas éjectée, et une position de bifurcation, indiquée en trait plein, dans laquelle l'aiguillage 46 est interposé sur le trajet du galet 25 pour guider ce dernier en direction de la came 27 pour commander le mandrin 21 en position inactive et ainsi éjecter la préforme 12.

La préforme 12 ainsi éjectée par le deuxième dispositif 41 d'éjection est dirigée vers le flux 42 de recyclage.

Le deuxième dispositif 41 d'éjection est ici agencé en amont de la cavité 30 de chauffe, à proximité immédiate de son extrémité amont.

En variante non représentée de l'invention, le deuxième dispositif 41 d'éjection est agencé en une autre position du trajet 18 de transport situé entre le point "A" d'entrée et la cavité 30 de chauffe, par exemple au niveau du virage formé autour de la deuxième roue 28B.

Selon une autre variante non représentée de l'invention, le deuxième dispositif 41 d'éjection est agencé en aval de la cavité 30 de chauffe.

Selon une autre variante non représentée de l'invention, l'éjection des préformes captives froides du flux "P" de production vers le flux 42 de recyclage est effectué en aval du point "B" de sortie de la station 10 de chauffage, par exemple lorsque les préformes sont prises en charge par des roues de transfert interposées entre la station 10 de chauffage et la station 13 de formage. Le deuxième dispositif 41 d'éjection est ainsi agencé en aval du point "B" de sortie le long du flux "P" de production.

Bien entendu, lorsque le deuxième dispositif 41 d'éjection est agencé en aval de la cavité 30 de chauffe, le procédé prévoit que les émetteurs 32 de la cavité 30 de chauffe sont maintenus dans un état éteint tant que des préformes 12 captives "froides" circulent dans la cavité 30 de chauffe.

Dans l'exemple représenté aux figures 1 et 4, les préformes 12 captives froides recyclées sont éjectées vers un tapis 44 de convoyage qui achemine les préformes 12 éjectées en direction du dispositif 15 de mise en ligne et de redressement des préformes froides en vue de l'alimentation de la station 10 de chauffage. Les préformes 12 recyclées sont ainsi mélangées en vrac avec de préformes 12 neuves en amont de la station 10 de chauffage.

En variante, les préformes 12 recyclées sont stockées dans une benne en attendant d'être valorisées. De manière non limitative, la valorisation peut consister soit à reverser ultérieurement les préformes 12 ainsi recyclées dans le dispositif 15 de mise en ligne et de redressement de la station 10 de chauffage, soit à les utiliser sur une autre installation de fabrication du même type que l'installation 11 de fabrication pour former des récipients finis, soit à les détruire et à utiliser leur matériau pour former de nouvelles préformes 12.

Selon un deuxième mode de réalisation de l'invention, les préformes 12 captives froides et les préformes 12 captives chaudes sont éjectées du flux "P" de production par un dispositif 34 d'éjection commun. Les préformes captives "froides", respectivement les préformes captives "chaudes", sont ensuite triées après éjection par le dispositif 34 d'éjection commun. Elles sont ainsi sélectivement aiguillées vers le flux 42 de recyclage ou vers le flux 38 de rebut, par un dispositif 50 de triage.

Le dispositif 34 d'éjection commun est identique au premier dispositif 34 d'éjection déjà décrit dans le premier mode de réalisation. Dans ce mode de réalisation, le dispositif 34 d'éjection commun est agencé en aval de la cavité 30 de chauffe. Le dispositif 34 d'éjection commun est agencé le long du flux "P" de production, par exemple en aval du point "B" de sortie de la station 10 de chauffage ou en amont du point "B" de sortie de la station 10 de chauffage.

Les préformes 12 captives sont toutes éjectées vers un flux d'éjection commun en travers duquel est agencé le dispositif 50 de triage. Le dispositif 50 de triage permet d'orienter sélectivement les préformes 12 captives éjectées vers le flux 42 de recyclage ou vers le flux 38 de rebut.

Dans l'exemple représenté à la figure 5, les préformes 12 éjectées tombent par exemple dans un toboggan 48 commun qui présente deux sorties : une première sortie 48A dirigée vers le flux 42 de recyclage et une deuxième sortie 48B dirigée vers le flux 38 de rebut. Les préformes 12 sont aiguillées vers l'une ou l'autre des sorties 48A, 48B par une palette mobile, formant ici le dispositif 50 de triage, par exemple montée pivotante entre deux positions d'aiguillage.

Le dispositif 50 de triage est par exemple commandé entre ses deux positions en fonction de la vitesse de défilement des préformes 12 le long du flux "P" de production. La vitesse de défilement des préformes 12 permet en effet d'estimer le temps nécessaire pour évacuer toutes les préformes 12 captives chaudes en prenant en compte la distance entre le début de la cavité 30 de chauffe et ledit dispositif 34 d'éjection commun.

En variante non représentée de l'invention, un détecteur est agencé dans l'installation pour détecter le passage des préformes 12 captives chaudes du dispositif 34 d'éjection commun. Il s'agit par exemple d'un détecteur de température.

Lors de la mise en oeuvre du procédé selon l'un quelconque des modes de réalisation, à l'issue de l'interruption, le dispositif 14 de convoyage est redémarré pour acheminer les préformes 12 captives le long du flux "P" de production.

Lorsque les préformes 12 captives chaudes passent au niveau du dispositif 34 d'éjection associé, ce dernier est commandé pour les éjecter en direction du flux 38 de rebut. Toutes les préformes 12 captives chaudes, qui ont été immobilisées après avoir été exposées au rayonnement électromagnétique émis par les émetteurs 32 sont ainsi éjectées vers le flux de rebut car elles sont susceptibles d'être impropres au formage de récipients finaux.

De même, lorsque les préformes 12 captives froides passent au niveau du dispositif 34 ou 41 d'éjection associé, selon le mode de réalisation, ce dernier est commander pour les éjecter en direction du flux 42 de recyclage.

Bien entendu, lorsque le dispositif 34,41 d'éjection des préformes 12 captives froides est agencé en aval de la cavité 30 de chauffe, les émetteurs 32 de la cavité 30 de chauffe sont maintenus dans un état éteint pour éviter que les préformes 12 captives froides ne soient chauffées pendant qu'elles circulent dans la cavité 30 de chauffe pour atteindre ledit dispositif 34, 41 d'éjection.

L'invention permet avantageusement de valoriser les préformes 12 captives froides en les séparant des préformes 12 captives chaudes, dont le matériau n'est plus exploitable pour la fabrication par soufflage d'objet en matériau thermoplastique.

## Revendications

1. Procédé de gestion de préformes (12) captives immobilisées dans une station (10) de chauffage pendant une interruption de production, la station (10) de chauffage faisant partie d'une installation (11) de fabrication de récipients en matériau thermoplastique par formage des préformes chauffées par la station (10) de chauffage, les préformes (12) suivant un flux (P) de production à travers l'installation (11) de fabrication, la station (10) de chauffage comportant :
- un dispositif (14) de convoyage de préformes (12) comportant des supports (16) individuels circulant en circuit fermé, chaque support (16) individuel étant destiné à transporter une préforme (12) en déplacement continu le long d'un trajet (18) de transport prédéterminé formant un tronçon du flux (P) de production, depuis un point (A) d'entrée jusqu'à un point (B) de sortie,
- une cavité (30) de chauffe bordée d'au moins une rangée d'émetteurs (32) de rayonnement électromagnétique monochromatique commandés entre un état éteint et un état allumé, la cavité (30) de chauffe étant traversée par le trajet (18) de transport ;
le procédé consistant à éjecter du flux (P) de production les préformes captives dites "froides", qui ont été immobilisées avant d'avoir été exposées au rayonnement électromagnétique émis par les émetteurs (32), vers un flux (42) de recyclage, et à éjecter du flux (P) de production les préformes captives dites "chaudes", qui ont été au moins partiellement exposées au rayonnement électromagnétique émis par les émetteurs (32), vers un flux (38) de rebut séparé du flux (42) de recyclage.

2. Procédé selon la revendication précédente, **caractérisé en ce que** les préformes (12) captives froides et les préformes (12) captives chaudes sont éjectées sélectivement du flux (P) de production par deux dispositifs (34, 41) distincts d'éjection de préformes (12).

3. Procédé selon la revendication 1, **caractérisé en ce que** les préformes (12) captives froides et les préformes (12) captives chaudes sont éjectées du flux (P) de production par un dispositif (34) d'éjection commun.

4. Procédé selon la revendication précédente, **caractérisé en ce que** les préformes (12) captives froides, respectivement les préformes (12) captives chaudes, éjectées par le dispositif (34) d'éjection commun sont sélectivement aiguillées vers le flux (42) de recyclage, respectivement vers le flux (38) de rebut, par un dispositif (50) de triage.

5. Procédé selon la revendication 2, **caractérisé en ce que** les préformes (12) captives froides sont éjectées du flux (P) de production en amont de la cavité (30) de chauffe.

6. Procédé selon l'une quelconque des revendications 1 à 4, **caractérisé en ce que** les préformes (12) captives froides sont éjectées du flux (P) de production en aval de la cavité (30) de chauffe.

7. Procédé selon la revendication précédente, **caractérisé en ce que** les préformes (12) captives froides sont éjectées du flux (P) de production en aval du point (B) de sortie de la station (10) de chauffage, par exemple lorsque les préformes (12) sont prises en charge par une roue de transfert agencée directement en aval de la station (10) de chauffage.

8. Procédé selon la revendication précédente, **caractérisé en ce que** les émetteurs (32) de la cavité (30) de chauffe sont maintenus dans un état éteint tant que des préformes (12) captives froides circulent dans la cavité (30) de chauffe.

9. Procédé selon l'une quelconque des revendications précédentes, **caractérisé en ce qu'**au moins une partie des préformes (12) captives froides orientées vers le flux (42) de recyclage sont ultérieurement transformées en récipient final par formage après chauffage.

10. Procédé selon la revendication précédente, **caractérisé en ce que** les préformes (12) captives froides orientées vers le flux de recyclage sont à nouveau introduites dans le flux (P) de production en amont de la station (10) de chauffage.

11. Procédé selon l'une quelconque des revendications précédentes, **caractérisé en ce qu'**au moins une partie des préformes (12) captives froides orientées vers le flux (42) de recyclage sont détruites et leur matériau est réutilisé pour fabriquer de nouvelles préformes (12).

12. Procédé selon l'une quelconque des revendications précédentes, **caractérisé en ce que** l'installation (11) de fabrication comporte une station (13) de formage qui est agencée en aval de la station (10) de chauffage le long du flux (P) de production, les préformes (12) captives chaudes étant éjectées du flux (P) de production en aval de la station (10) de chauffage, par exemple au niveau de la station (13) de formage.

13. Station (10) de chauffage pour la mise en oeuvre du procédé selon l'une quelconque des revendications 1 à 12, comportant un premier dispositif (34) d'éjection agencé le long du trajet (18) de transport en aval de la cavité (30) de chauffe permettant d'éjecter sélectivement une préforme (12) de son support (16) individuel en amont du point (B) de sortie, la préforme (12) ainsi éjectée étant dirigée vers le flux (38) de rebut, et ce qu'elle comporte un deuxième dispositif (41) d'éjection agencés le long du trajet (18) de transport permettant d'éjecter sélectivement une préforme (12) de son support (16) individuel en amont du point (B) de sortie, la préforme (12) ainsi éjectée étant dirigée vers un flux (42) de recyclage en direction du point (A) d'entrée de la station (10) de chauffage.

14. Installation (11) de fabrication de récipients pour la mise en oeuvre du procédé, selon l'une quelconque des revendications 1 à 12, comportant un dispositif (34) commun d'éjection des préformes (12) captives, l'installation (11) de fabrication comportant un dispositif (50) de triage sélectif des préformes (12) éjectées par ledit dispositif (34) commun d'éjection vers un flux (42) de recyclage ou vers un flux (38) de rebut.

## Patentansprüche

1. Verfahren zur Verwaltung von gefangenen Vorformlingen (12), die während einer Produktionsunterbrechung in einer Heizstation (10) immobilisiert sind, wobei die Heizstation (10) zu einer Anlage (11) zur Herstellung von Behältern aus thermoplastischem Material durch Formung der Vorformlinge, die von der Heizstation (10) erhitzt werden, gehört, wobei die Vorformlinge (12) einem Produktionsfluss (P) durch die Herstellungsanlage (11) folgen, wobei die Heizstation (10) Folgendes beinhaltet:
- eine Vorrichtung (14) zum Fördern von Vorformlingen (12), die einzelne Träger (16) beinhaltet, die im geschlossenen Kreis zirkulieren, wobei jeder einzelne Träger (16) dazu bestimmt ist, einen Vorformling (12) in durchgehender Bewegung entlang eines vorbestimmten Transportwegs (18), der ein Teilstück des Produktionsflusses (P) bildet, von einem Eintrittspunkt (A) bis zu einem Austrittspunkt (B) zu transportieren,
- einen Heizhohlraum (30), der von wenigstens einer Reihe von Strahlern (32) monochromatischer elektromagnetischer Strahlung gesäumt ist, die zwischen einem ausgeschalteten Zustand und einem eingeschalteten Zustand gesteuert werden, wobei der Heizhohlraum (30) von dem Transportweg (18) durchquert wird;
wobei das Verfahren darin besteht, aus dem Produktionsfluss (P) die "kalten" gefangenen Vorformlinge, die immobilisiert wurden, bevor sie der elektromagnetischen Strahlung ausgesetzt wurden, die von den Strahlern (32) abgegeben wird, zu einem Rückführfluss (42) hin auszuwerfen, und aus dem Produktionsfluss (P) die "heißen" Vorformlinge, die wenigstens teilweise der elektromagnetischen Strahlung ausgesetzt wurden, die von den Strahlern (32) abgegeben wird, zu einem Ausschussfluss (38) hin auszuwerfen, der vom Rückführfluss (42) getrennt ist.

2. Verfahren nach dem vorhergehenden Anspruch, **dadurch gekennzeichnet, dass** die kalten gefangenen Vorformlinge (12) und die heißen gefangenen Vorformlinge (12) von zwei gesonderten Vorrichtungen (34, 41) zum Auswerfen von Vorformlingen (12) selektiv aus dem Produktionsfluss (P) ausgeworfen werden.

3. Verfahren nach Anspruch 1, **dadurch gekennzeichnet, dass** die kalten gefangenen Vorformlinge (12) und die heißen gefangenen Vorformlinge (12) von einer gemeinsamen Auswurfvorrichtung (34) aus dem Produktionsfluss (P) ausgeworfen werden.

4. Verfahren nach dem vorhergehenden Anspruch, **dadurch gekennzeichnet, dass** die kalten gefangenen Vorformlinge (12) bzw. die heißen gefangenen Vorformlinge (12), die von der gemeinsamen Auswurfvorrichtung (34) ausgeworfen werden, von einer Sortiervorrichtung (50) selektiv zu einem Rückführfluss (42) bzw. einem Ausschussfluss (38) geleitet werden.

5. Verfahren nach Anspruch 2, **dadurch gekennzeichnet, dass** die kalten gefangenen Vorformlinge (12) stromauf des Heizhohlraums (30) aus dem Produktionsfluss (P) ausgeworfen werden.

6. Verfahren nach einem der Ansprüche 1 bis 4, **dadurch gekennzeichnet, dass** die kalten gefangenen Vorformlinge (12) stromab des Heizhohlraums (30) aus dem Produktionsfluss (P) ausgeworfen werden.

7. Verfahren nach dem vorhergehenden Anspruch, **dadurch gekennzeichnet, dass** die kalten gefangenen Vorformlinge (12) stromab des Austrittspunkts (B) der Heizstation (10) aus dem Produktionsfluss (P) ausgeworfen werden, zum Beispiel wenn die Vorformlinge (12) von einem Übergaberad übernommen werden, das direkt stromab der Heizstation (10) angeordnet ist.

8. Verfahren nach dem vorhergehenden Anspruch, **dadurch gekennzeichnet, dass** die Strahler (32) des Heizhohlraums (30) in einem ausgeschalteten Zustand gehalten werden, solange die kalten gefangenen Vorformlinge (12) im Heizhohlraum (30) zirkulieren.

9. Verfahren nach einem der vorhergehenden Ansprüche, **dadurch gekennzeichnet, dass** wenigstens einige der kalten gefangenen Vorformlinge (12), die zum Rückführfluss (42) hin gelenkt werden, später durch Formung nach Erhitzen in den endgültigen Behälter umgewandelt werden.

10. Verfahren nach dem vorhergehenden Anspruch, **dadurch gekennzeichnet, dass** die kalten gefangenen Vorformlinge (12), die zum Rückführfluss hin gelenkt werden, stromauf der Heizstation (10) erneut in den Produktionsfluss (P) eingeleitet werden.

11. Verfahren nach einem der vorhergehenden Ansprüche, **dadurch gekennzeichnet, dass** wenigstens einige der kalten gefangenen Vorformlinge (12), die zum Rückführfluss (42) hin gelenkt werden, zerstört werden und ihr Material zur Herstellung neuer Vorformlinge (12) wiederverwendet wird.

12. Verfahren nach einem der vorhergehenden Ansprüche, **dadurch gekennzeichnet, dass** die Herstellungsanlage (11) eine Formungsstation (13) beinhaltet, die stromab der Heizstation (10) entlang des Produktionsflusses (P) angeordnet ist, wobei die heißen gefangenen Vorformlinge (12) stromab der Heizstation (10) aus dem Produktionsfluss (P) ausgeworfen werden, zum Beispiel im Bereich der Formungsstation (13).

13. Heizstation (10) für die Durchführung des Verfahrens nach einem der Ansprüche 1 bis 12, die eine erste Auswurfvorrichtung (34) beinhaltet, die entlang des Transportwegs (18) stromab des Heizhohlraums (30) angeordnet ist, die es ermöglicht, einen Vorformling (12) stromauf des Austrittspunkts (B) selektiv aus seinem einzelnen Träger (16) auszuwerfen, wobei der so ausgeworfene Vorformling (12) zum Ausschussfluss (38) geführt wird, und die eine zweite Auswurfvorrichtung (41) beinhaltet, die entlang des Transportwegs (18) angeordnet sind, die es ermöglicht, einen Vorformling (12) stromauf des Austrittspunkts (B) selektiv aus seinem einzelnen Träger (16) auszuwerfen, wobei der so ausgeworfene Vorformling (12) zu einem Rückführfluss (42) in Richtung des Eintrittspunkts (A) der Heizstation (10) geführt wird.

14. Anlage (11) zur Herstellung von Behältern für die Durchführung des Verfahrens nach einem der Ansprüche 1 bis 12, die eine gemeinsame Vorrichtung (34) zum Auswerfen der gefangenen Vorformlinge (12) beinhaltet, wobei die Herstellungsanlage (11) eine Vorrichtung (50) zur selektiven Sortierung der Vorformlinge (12) beinhaltet, die von der gemeinsamen Auswurfvorrichtung (34) zu einem Rückführfluss (42) oder zu einem Ausschussfluss (38) hin ausgeworfen werden.

## Claims

1. Method for managing of captive preforms (12) immobilized in a heating station (10) during an interruption of production, the heating station (10) forming part of an installation (11) for production of thermoplastic material containers by forming the preforms heated by the heating station (10), the preforms (12) following a production stream (P) through the production installation (11), the heating station (10) including:
- a device (14) for conveying preforms (12) including individual supports (16) circulating in a closed circuit, each individual support (16) being intended to transport a preform (12) in continuous movement along a predetermined transport path (18) forming a section of the production stream (P) from an entry point (A) to an exit point (B),
- a heating cavity (30) bordered by at least one row of emitters (32) of monochromatic electromagnetic radiation commanded between an extinguished state and a lit state, the heating cavity (30) being crossed by the transport path (18);
the method consisting in ejecting from the production stream (P) the so-called "cold" captive preforms that have been immobilized before they have been exposed to the electromagnetic radiation emitted by the emitters (32) to a recycling stream (42) and in ejecting from the production stream (P) the so-called "hot" captive preforms that have been at least partly exposed to the electromagnetic radiation emitted by the emitters (32) to a reject stream (38) separate from the recycling stream (42).

2. Method according to the preceding claim, **characterized in that** the cold captive preforms (12) and the hot captive preforms (12) are selectively ejected from the production stream (P) by two distinct devices (34, 41) for ejecting preforms (12).

3. Method according to Claim 1, **characterized in that** the cold captive preforms (12) and the hot captive preforms (12) are ejected from the production stream (P) by a common ejector device (34).

4. Method according to the preceding claim, **characterized in that** the cold captive preforms (12), respectively the hot captive preforms (12), ejected by the common ejector device (34) are selectively switched to the recycling stream (42), respectively to the reject stream (38), by a sorting device (50).

5. Method according to Claim 2, **characterized in that** the cold captive preforms (12) are ejected from the production stream (P) upstream of the heating cavity (30) .

6. Method according to any one of Claims 1 to 4, **characterized in that** the cold captive preforms (12) are ejected from the production stream (P) downstream of the heating cavity (30).

7. Method according to the preceding claim, **characterized in that** the cold captive preforms (12) are ejected from the production stream (P) downstream of the exit point (B) of the heating station (10), for example when the preforms (12) are taken up by a transfer wheel arranged directly downstream of the heating station (10).

8. Method according to the preceding claim, **characterized in that** the emitters (32) of the heating cavity (30) are maintained in an extinguished state for as long as the cold captive preforms (12) circulate in the heating cavity (30).

9. Method according to any one of the preceding claims, **characterized in that** at least some of the cold captive preforms (12) oriented toward the recycling stream (42) are subsequently transformed into finished containers by forming after heating.

10. Method according to the preceding claim, **characterized in that** the cold captive preforms (12) oriented toward the recycling stream are again introduced into the production stream (P) upstream of the heating station (10).

11. Method according to any one of the preceding claims, **characterized in that** at least some of the cold captive preforms (12) oriented toward the recycling stream (42) are destroyed and the material thereof is re-used to produce new preforms (12).

12. Method according to any one of the preceding claims, **characterized in that** the production installation (11) includes a forming station (13) that is arranged downstream of the heating station (10) along the production stream (P), the hot captive preforms (12) being ejected from the production stream (P) downstream of the heating station (10), for example at the level of the forming station (13).

13. Heating station (10) for executing the method according to any one of Claims 1 to 12, including a first ejector device (34) arranged along the transport path (18) downstream of the heating cavity (30) allowing selective ejection of a preform (12) from its individual support (16) upstream of the exit point (B), the preform (12) ejected in this way being directed toward the reject stream (38), and including a second ejector device (41) arranged along the transport path (18) allowing selective ejection of a preform (12) from its individual support (16) upstream of the exit point (B), the preform (12) ejected in this way being directed toward a recycling stream (42) in the direction of the entry point (A) of the heating station (10).

14. Container production installation (11) for executing the method according to any one of Claims 1 to 12, including a common device (34) for ejecting the captive preforms (12), the production installation (11) including a device (50) for selectively sorting the preforms (12) ejected by said common ejector device (34) toward a recycling stream (42) or toward a reject stream (38) .
